# EUROPÄISCHE PATENTSCHRIFT

(11) **EP 2 134 985 B1**
(45) Veröffentlichungstag und Bekanntmachung des Hinweises auf die Patenterteilung: **25.05.2016**
(21) Anmeldenummer: 08717599.8
(22) Anmeldetag: 11.03.2008
(51) Int. Cl.: F16F 15/26

(54) **MASSENAUSGLEICHSGETRIEBE EINER BRENNKRAFTMASCHINE**
MASS EQUALIZER TRANSMISSION OF AN INTERNAL COMBUSTION ENGINE
MECANISME DE COMPENSATION DES MASSES D'UN MOTEUR A COMBUSTION INTERNE

(30) Priorität: 13.04.2007 DE 102007017873
(43) Veröffentlichungstag der Anmeldung: 23.12.2009
(73) Patentinhaber: Schaeffler Technologies AG & Co. KG, 91074 Herzogenaurach (DE)
(72) Erfinder: TISCH, Siegfried, 70839 Gerlingen (DE)
(86) Internationale Anmeldenummer: PCT/EP2008/052852
(87) Internationale Veröffentlichungsnummer: WO 2008/125398

(56) Entgegenhaltungen:
- EP-A- 0 243 683
- EP-A- 1 081 410
- EP-A- 1 304 450
- FR-A- 2 619 881
- JP-A- 9 151 993
- JP-A- 2006 002 852

## Beschreibung

### Gebiet der Erfindung

Die Erfindung betrifft ein Massenausgleichsgetriebe zum Ausgleich von Massenkräften und/oder Massenmomenten einer Brennkraftmaschine, mit einer Ausgleichswelle, die einen zu ihrer Rotationsachse beabstandeten Massenschwerpunkt und zumindest einen Lagerzapfen aufweist, an dem die Ausgleichswelle in einer Lagerstelle der Brennkraftmaschine drehbar gelagert ist. Dabei umfasst der Lagerzapfen zwei axial beabstandete zylindrische Lagerzapfenabschnitte, die eine bezüglich des Massenschwerpunkts überwiegend oder vollständig jenseits der Rotationsachse verlaufende Ausnehmung begrenzen.

### Hintergrund der Erfindung

Ein Massenausgleichsgetriebe mit einer derartigen Ausgleichswelle geht aus der als gattungsbildend betrachteten EP 1 081 410 B1 hervor. Zusammenfassend liegt der dort vorgeschlagenen Ausgleichswelle die Erkenntnis zugrunde, dass der Lagerzapfen der Ausgleichswelle an einem Umfangsabschnitt, der dem Massenschwerpunkt gegenüberliegt, vergleichsweise gering belastet ist und infolgedessen die in diesem Umfangsabschnitt zwischen den zylindrischen Lagerzapfenabschnitten verlaufende Ausnehmung die Tragfähigkeit des Lagerzapfens nicht beeinträchtigt. Im Hinblick auf die stets so gering wie möglich zu haltende Masse der Ausgleichswelle ergeben sich hieraus zwei signifikante Vorteile. Zum einen entfällt die der Ausnehmung entsprechende Masse des Lagerzapfens und zum anderen führt die entfallende Masse der Ausnehmung zu einer Abstandsvergrößerung des Massenschwerpunkts von der Rotationsachse der Ausgleichswelle. Der zweitgenannte Vorteil eröffnet konstruktiven Spielraum dahingehend, die Unwuchtwirkung der Ausgleichswelle bei ansonsten gleicher Masse zu erhöhen oder die Masse der Ausgleichswelle bei konstanter Lage des Massenschwerpunkts durch zusätzliches Entfernen von Material weiter zu reduzieren. Zwischen diesen Grenzen sind selbstverständlich beliebige Ausgestaltungen möglich.

Bei dem in der zitierten Druckschrift vorgeschlagenen Massenausgleichsgetriebe handelt es sich jedoch um eine an ihrem Lagerzapfen hydrodynamisch gleitgelagerte Ausgleichswelle. Nachteilig dabei sind einerseits die für solche Gleitlager typischen Reibleistungsverluste, die insbesondere bei tiefen Temperaturen und/oder hochviskosem Hydraulikmittel erheblich sein können und folglich zu einem nicht nur fahrzyklusrelevanten Kraftstoffmehrverbrauch der Brennkraftmaschine führen können. Andererseits kann das Potenzial der eingangs genannten Vorteile nur beschränkt umgesetzt werden, da die Lagerzapfenabschnitte unter Berücksichtigung eines ausreichend tragfähigen Schmierfilmaufbaus im hydrodynamischen Gleitlager nicht beliebig schmal ausgebildet werden können.

### Aufgabe der Erfindung

Der vorliegenden Aufgabe liegt daher die Aufgabe zugrunde, ein Massenausgleichsgetriebe der eingangs genannten Art so fortzubilden, dass die genannten Nachteile mit einfachen Mitteln beseitigt sind. Insbesondere soll der die Ausnehmung aufweisende Lagerzapfen konstruktiv so flexibel gestaltbar sein, dass zum einen die genannten Reibungsnachteile einer Gleitlagerung vermieden werden und zum anderen ein Höchstmaß an Gestaltungsspielraum hinsichtlich der Breite der Lagerzapfenabschnitte im Bereich der Ausnehmung und somit hinsichtlich der durch die Ausnehmung erzielbaren Unwuchterhöhung und/oder der Massenreduzierung der Ausgleichswelle besteht.

### Zusammenfassung der Erfindung

Erfindungsgemäß wird diese Aufgabe durch die kennzeichnenden Merkmale des Anspruchs 1 gelöst, während vorteilhafte Ausgestaltungen und Weiterbildungen der Erfindung den Unteransprüchen entnehmbar sind. Demnach soll die Lagerstelle als Wälzlager ausgebildet sein, wobei das Wälzlager als innenringfreies Nadellager ausgebildet ist, dessen Nadeln unter axialer Überbrückung der Lagerzapfenabschnitte auf dem Lagerzapfen abwälzen. Während einerseits das Wälzlager gegenüber einem hydrodynamischen Gleitlager insbesondere bei hochviskosem Hydraulikmittel infolge niedriger Temperatur oder infolge seiner Viskositätseigenschaften zu einer erheblichen Reduzierung der erforderlichen Antriebsleistung für das Massenausgleichsgetriebe und somit zu niedrigeren Reibleistungsverlusten der Brennkraftmaschine führt, entfallen andererseits die durch ein hydrodynamisches Gleitlager gestellten Anforderungen an die Breite der zylindrischen Lagerzapfenabschnitte im Hinblick auf einen tragfähigen Schmierfilmaufbau im Gleitlager. Das bedeutet, dass im Falle der Wälzlagerung die Lagerzapfenabschnitte deutlich schmaler als im Falle der Gleitlagerung ausgeführt werden können, so dass durch die zusätzlich entfallende Masse der nunmehr breiteren Ausnehmung zwischen den Lagerzapfenabschnitten das vorgenannte Potenzial zur Unwuchterhöhung und/oder Massenreduzierung der Ausgleichswelle bestmöglich ausgeschöpft werden kann.

Aus der Kenntnis heraus, dass es sich bei dem Belastungsfall der Lagerstelle einerseits um eine Punktlast des Lagerzapfens auf Seiten des Massenschwerpunkts und folglich am Umfangsabschnitt der vollen Lagerzapfenbreite und andererseits um eine mit dem Massenschwerpunkt umlaufende Umfangslast in dem die Ausgleichswelle lagernden Gehäuse handelt, ist es erfindungsgemäß vorgesehen, dass das Wälzlager als innenringfreies Nadellager ausgebildet ist, dessen Nadeln unter (zyklischer) axialer Überbrückung der Lagerzapfenabschnitte auf dem Lagerzapfen abwälzen. Eine unzulässig hohe Materialbeanspruchung der dann unmittelbar als Laufbahn für die Nadeln dienenden Lagerzapfenabschnitte kann aufgrund des im Bereich der Ausnehmung nur gering belasteten Lagerzapfens ausgeschlossen werden, so dass der radiale Bauraummehrbedarf eines Wälzlagers gegenüber einem Gleitlager einerseits durch den Verzicht auf einen Innenring und andererseits durch die Verwendung von Nadeln mit kleinem Durchmesser auf ein Minimum reduziert werden kann.

Dies gilt insbesondere dann, wenn das Nadellager als Nadelhülse mit einem spanlos hergestellten, dünnwandigen Außenring, einem Käfig und den darin geführten Nadeln ausgebildet ist.

Außerdem ist eine drucklose Schmierung des Wälzlagers mittels im Betrieb der Brennkraftmaschine anfallenden Schmierölnebels vorgesehen, wobei der Lagerzapfen zumindest einen an diesen angrenzenden Wellenabschnitt wenigstens innerhalb eines Teilumfangs radial überragt und innerhalb des Teilumfangs zwischen dem Wellenabschnitt und dem zugehörigen Lagerzapfenabschnitt zumindest eine sich radial auswärts erstreckende Rippe verläuft, die unter einem Anstellwinkel geneigt zur Rotationsachse der Ausgleichswelle verläuft und als Schaufel zur Druck- oder Saugförderung des Schmierölnebels in das Wälzlager dient. Im Gegensatz zur aufwändigen und die Hydraulikmittelpumpe der Brennkraftmaschine belastenden Druckmittelversorgung für ein hydrodynamisches Gleitlager wird also der im Gehäuse ohnehin anfallende Schmierölnebel zur herstell- und kostenneutralen Schmierölversorgung des Wälzlagers genutzt, indem sich abhängig vom Anstellwinkel der einzelnen Rippe entweder eine von dieser zum Wälzlager hin gerichtete Druckströmung des Schmierölnebels oder aber eine durch das Wälzlager hindurch zur Rippe gerichtete Saugströmung des Schmierölnebels bei Rotation der Ausgleichswelle einstellt. Im Falle einer Ausgleichswelle mit Versteifungsrippen, wie sie in der eingangs zitierten Druckschrift vorgeschlagen sind, brauchen diese lediglich um den Anstellwinkel verdreht zu werden und können somit ebenfalls kostenneutral auf der Ausgleichswelle angeordnet werden. Wie es dem Fachmann auf dem Gebiet von Strömungsmaschinen bekannt ist, soll die als Schaufel ausgebildete Rippe selbstverständlich nicht nur auf eine ebene Rippe mit konstantem Anstellwinkel beschränkt sein, sondern kann auch ein hinsichtlich der zu erzielenden Strömung oder Umlenkung angepasstes Profil einschließlich eines über deren axialer Erstreckung veränderlichen Anstellwinkels aufweisen.

Schließlich soll zur Versteifung der Ausgleichswelle und zur Unterstützung der vorgenannten Druck- oder Saugförderung des Schmierölnebels in das Wälzlager in der Ausnehmung zumindest ein sich radial auswärts erstreckender und die Lagerzapfenabschnitte verbindender Steg verlaufen, wobei der Steg und die Rippe unter demselben Anstellwinkel geneigt zur Rotationsachse der Ausgleichswelle verlaufen.

Sofern es möglich und zweckmäßig ist, können die vorgenannten Merkmale und Ausgestaltungen der Erfindung auch in geeigneter Weise miteinander kombiniert werden.

### Kurze Beschreibung der Zeichnungen

Weitere Merkmale und Ausgestaltungen der Erfindung ergeben sich aus der nachfolgenden Beschreibung und aus den Zeichnungen, in denen Ausführungsbeispiele der Erfindung teilweise vereinfacht dargestellt sind. Es zeigen:
- Figur 1: eine Ausgleichswelle eines erfindungsgemäßen Massenausgleichsgetriebes in perspektivischer Darstellung;
- Figur 2: die Ansicht I aus Figur 1 mit längsgeschnittener Lagerstelle und
- Figur 3: die Ansicht II aus Figur 1 mit längsgeschnittener Lagerstelle.

### Ausführliche Beschreibung der Zeichnungen

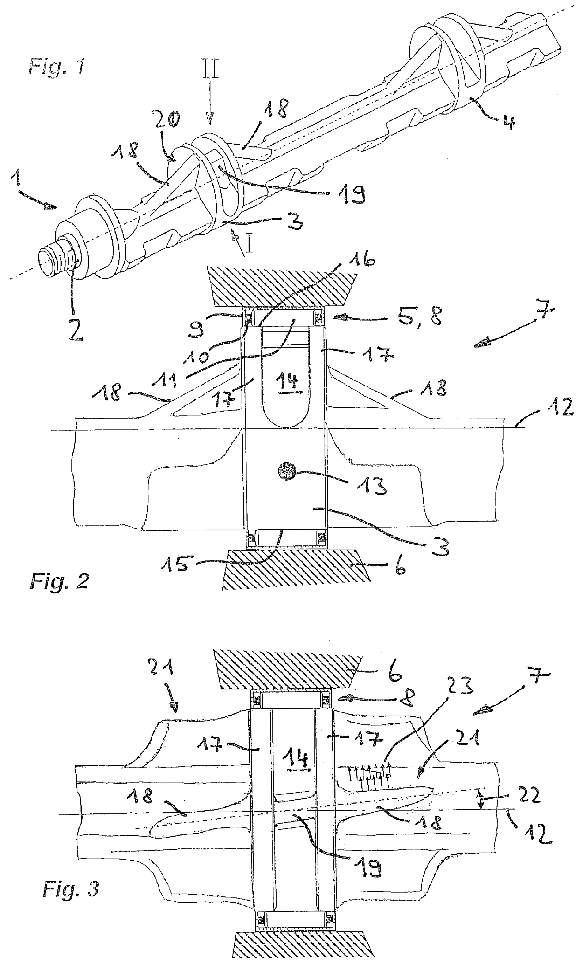

In Figur 1 ist eine Ausgleichswelle 1 als Teil eines Massenausgleichsgetriebes zum Ausgleich von Massenkräften und/oder Massenmomenten einer Brennkraftmaschine offenbart. Das dem Fachmann an sich bekannte und hier nicht näher dargestellte Massenausgleichsgetriebe dient in diesem Fall dem Ausgleich von Massenkräften zweiter Ordnung in einem Mehrzylinderreihenmotor und umfasst zwei Ausgleichswellen 1, die mit doppelter Kurbelwellendrehzahl gegenläufig rotieren. Die Ausgleichswelle 1 wird an einem Antriebsabschnitt 2 beispielsweise über ein Kettenrad oder ein Zahnrad angetrieben und umfasst zwei Lagerzapfen 3 und 4, an denen die Ausgleichswelle 1 in Lagerstellen 5 eines Gehäuses 6 (siehe Figuren 2 oder 3) der Brennkraftmaschine radial gelagert ist.

Die in Figur 1 dargestellten Lagerzapfen 3 und 4 sind, wie später erläutert, konstruktiv unterschiedlich ausgebildet und lediglich aus Gründen der Vereinfachung an derselben Ausgleichswelle 1 dargestellt. Bei einem ausgeführten Massenausgleichsgetriebe kann es jedoch in Abhängigkeit der Steifigkeitsanforderungen an die Ausgleichswelle 1 zweckmäßig oder erforderlich sein, die Lagerzapfen 3 und 4 identisch auszuführen.

In den Figuren 2 und 3 ist das dort mit 7 bezeichnete Massenausgleichsgetriebe gemäß den Ansichten I bzw. II aus Figur 1 mit dem jeweils nur angedeuteten Gehäuse 6 im Bereich des Lagerzapfens 3 vergrößert dargestellt. Dabei kann das Gehäuse 6 entweder unmittelbarer Bestandteil des Kurbelgehäuses der Brennkraftmaschine sein oder auch als separates Getriebegehäuse ausgebildet sein, das mit dem Kurbelgehäuse fest verbunden ist. Jede der Lagerstellen 5 ist als Wälzlager 8 ausgebildet, in dem jeweils der zugehörige Lagerzapfen 3 oder 4 der Ausgleichswelle 1 drehbar gelagert ist. Das Wälzlager 8 ist in diesem Ausführungsbeispiel als innenringfreies Nadellager und hier konkret als Nadelhülse mit einem spanlos hergestellten, dünnwandigen Außenring 9, einem Käfig 10 und den darin geführten Nadeln 11 ausgebildet. Die Nadeln 11 wälzen unmittelbar auf dem Lagerzapfen 3 ab, der eine bezüglich eines zur Rotationsachse 12 der Ausgleichswelle 1 beabstandeten Massenschwerpunkts 13 jenseits der Rotationsachse 12 verlaufende Ausnehmung 14 aufweist. Im Hinblick auf die Kinematik des Nadellagers 8 bedeutet dies, dass die Nadeln 11 abwechselnd auf einem ersten Umfangsabschnitt 15, der seitens des Massenschwerpunkts 13 die vollständige Breite des Lagerzapfens 3 aufweist, und auf einem zweiten Umfangsabschnitt 16, der auf der dem Massenschwerpunkt 13 abgewandten Seite die Summenbreite von zwei die Ausnehmung 14 begrenzenden zylindrischen Lagerzapfenabschnitten 17 aufweist, abwälzen.

Aufgrund des für die Ausgleichswelle 1 spezifischen Belastungsfalls der Lagerstelle 5 mit Punktlast des Lagerzapfens 3 seitens des Massenschwerpunkts 13 und Umfangslast am Gehäuse 6, können die dementsprechend nur gering belasteten Lagerzapfenabschnitte 17 auch deutlich schmaler als dargestellt ausgeführt werden, solange sie von den Nadeln 11 axial überbrückt werden. Alternativ zu der in Figur 2 dargestellten Variante des Lagerzapfens 3, dessen zweiter Umfangsabschnitt 16 im Bereich der Ausnehmung 14 etwa 180° beträgt, kann sich die Ausnehmung 14 ebenfalls über einen Winkelbereich deutlich oberhalb oder unterhalb dieses Winkels erstrecken, solange sie bezüglich des Massenschwerpunkts 13 zumindest überwiegend jenseits der Rotationsachse 12 verläuft.

Wie es nachfolgend anhand Figur 3 erläutert ist, erfolgt die Schmierung des Nadellagers 8 drucklos mittels im Betrieb der Brennkraftmaschine anfallenden Schmierölnebels. Dieser gelangt aufgrund einer von sich radial auswärts erstreckenden Rippen 18 erzeugten Druck- oder Saugförderung in das Nadellager 8. Die Rippen 18 dienen wie ein Steg 19, der sich in der Ausnehmung 14 radial auswärts erstreckt und die Lagerzapfenabschnitte 17 verbindet, der Versteifung der Ausgleichswelle 1 und verlaufen jeweils zwischen dem Lagerzapfen 3 und einem an den Lagerzapfen 3 angrenzenden und von diesem innerhalb eines Teilumfangs 20 (siehe Figur 1) radial überragten Wellenabschnitt 21. Im Falle des in Figur 2 dargestellten Lagerzapfens 3 weisen der Teilumfang 20 und der zweite Umfangsabschnitt 16 des Lagerzapfens 3 einen im wesentlichen identischen Winkel von 180° auf.

Wie bereits erwähnt, handelt es sich beim Steg 19 um eine konstruktive Option, die lediglich beim Lagerzapfen 3 dargestellt ist und in der Praxis sinnvollerweise bei beiden oder bei keinem der Lagerzapfen 3 und 4 vorzusehen ist.

Durch die als Schaufeln wirkenden Rippen 18 wird eine Strömung oder Umlenkung des Schmierölnebels in Richtung des Nadellagers 8 erzeugt. Wie aus Figur 3 hervorgeht, verlaufen hierzu die Rippen 18 jeweils unter einem Anstellwinkel 22 geneigt zur Rotationsachse 12 der Ausgleichswelle 1, so dass der Schmierölnebel - hier unabhängig von der Drehrichtung der Ausgleichswelle 1 -einerseits in das Nadellager 8 hineingefördert und andererseits durch das Nadellager 8 hindurchgesaugt wird. Die durch die Pfeileschar 23 symbolisierte Strömung oder Umlenkung des Schmierölnebels wird innerhalb der Ausnehmung 14 des Lagerzapfens 3 durch den Steg 19 unterstützt, der unter demselben Anstellwinkel 22 der Rippen 18 geneigt zur Rotationsachse 12 verläuft.

### Liste der Bezugszahlen

- 1: Ausgleichswelle
- 2: Antriebsabschnitt
- 3: Lagerzapfen
- 4: Lagerzapfen
- 5: Lagerstelle
- 6: Gehäuse
- 7: Massenausgleichsgetriebe
- 8: Wälzlager, Nadellager
- 9: Außenring
- 10: Käfig
- 11: Nadel
- 12: Rotationsachse
- 13: Massenschwerpunkt
- 14: Ausnehmung
- 15: erster Umfangsabschnitt
- 16: zweiter Umfangsabschnitt
- 17: Lagerzapfenabschnitt
- 18: Rippe
- 19: Steg
- 20: Teilumfang
- 21: Wellenabschnitt
- 22: Anstellwinkel
- 23: Pfeileschar

## Patentansprüche

1. Massenausgleichsgetriebe (7) zum Ausgleich von Massenkräften und/oder Massenmomenten einer Brennkraftmaschine, mit einer Ausgleichswelle (1), die einen zu ihrer Rotationsachse (12) beabstandeten Massenschwerpunkt (13) und zumindest einen Lagerzapfen (3, 4) aufweist, an dem die Ausgleichswelle (1) in einer Lagerstelle (5) der Brennkraftmaschine drehbar gelagert ist, wobei der Lagerzapfen (3, 4) zwei axial beabstandete zylindrische Lagerzapfenabschnitte (17) umfasst, die eine bezüglich des Massenschwerpunkts (13) überwiegend oder vollständig jenseits der Rotationsachse (12) verlaufende Ausnehmung (14) begrenzen, **dadurch gekennzeichnet, dass** die Lagerstelle (5) als Wälzlager (8) ausgebildet ist, wobei das Wälzlager (8) als innenringfreies Nadellager ausgebildet ist, dessen Nadeln (11) unter axialer Überbrückung der Lagerzapfenabschnitte (17) auf dem Lagerzapfen (3, 4) abwälzen.

2. Massenausgleichsgetriebe (7) nach Anspruch 1, **dadurch gekennzeichnet, dass** das Nadellager (8) als Nadelhülse mit einem spanlos hergestellten, dünnwandigen Außenring (9), einem Käfig (10) und den darin geführten Nadeln (11) ausgebildet ist.

3. Massenausgleichsgetriebe (7) nach Anspruch 1, **dadurch gekennzeichnet, dass** eine drucklose Schmierung des Wälzlagers (8) mittels im Betrieb der Brennkraftmaschine anfallenden Schmierölnebels vorgesehen ist, wobei der Lagerzapfen (3, 4) zumindest einen an diesen angrenzenden Wellenabschnitt (21) wenigstens innerhalb eines Teilumfangs (20) radial überragt und innerhalb des Teilumfangs (20) zwischen dem Wellenabschnitt (21) und dem zugehörigen Lagerzapfenabschnitt (17) zumindest eine sich radial auswärts erstreckende Rippe (18) verläuft, die unter einem Anstellwinkel (22) geneigt zur Rotationsachse (12) der Ausgleichswelle (1) verläuft und als Schaufel zur Druck- oder Saugförderung des Schmierölnebels in das Wälzlager (8) dient.

4. Massenausgleichsgetriebe (7) nach Anspruch 3, **dadurch gekennzeichnet, dass** in der Ausnehmung (14) zumindest ein sich radial auswärts erstreckender und die Lagerzapfenabschnitte (17) verbindender Steg (19) verläuft, wobei der Steg (19) und die Rippe (18) unter demselben Anstellwinkel (22) geneigt zur Rotationsachse (12) der Ausgleichswelle (1) verlaufen.

## Claims

1. Mass-balancing gear mechanism (7) for balancing inertia forces and/or inertia moments of an internal combustion engine, having a balancing shaft (1) which has a centre of mass (13) which is spaced apart from its rotational axis (12) and at least one bearing journal (3, 4), on which the balancing shaft (1) is mounted rotatable at a bearing point (5) of the internal combustion engine, the bearing journal (3, 4) comprising two cylindrical bearing journal sections (17) which are spaced apart axially and delimit a recess (14) which runs predominantly or completely on the other side of the rotational axis (12) with regard to the centre of mass (13), **characterized in that** the bearing point (5) is configured as an anti-friction bearing (8), the anti-friction bearing (8) being configured as a needle bearing without an inner ring, the needles (11) of which roll on the bearing journal (3, 4) while bridging the bearing journal sections (17) axially.

2. Mass-balancing gear mechanism (7) according to Claim 1, **characterized in that** the needle bearing (8) is configured as a needle bush with a thin-walled outer ring (9) which is manufactured without the removal of material, a cage (10) and the needles (11) which are guided therein.

3. Mass-balancing gear mechanism (7) according to Claim 1, **characterized in that** pressureless lubrication of the anti-friction bearing (8) is provided by means of lubricating oil mist which accrues during operation of the internal combustion engine, the bearing journal (3, 4) protruding radially beyond at least one shaft section (21) which adjoins it at least within a part circumference (20), and at least one radially outwardly extending rib (18) running within the part circumference (20) between the shaft section (21) and the associated bearing journal section (17), which rib (18) runs in a manner which is inclined at an angle of attack (22) with respect to the rotational axis (12) of the balancing shaft (1) and serves as a vane for pressure or vacuum conveying of the lubricating oil mist into the anti-friction bearing (8).

4. Mass-balancing gear mechanism (7) according to Claim 3, **characterized in that** at least one web (19) which extends radially outwards and connects the bearing journal sections (17) runs in the recess (14), the web (19) and the rib (18) running in a manner which is inclined at the same angle of attack (22) with respect to the rotational axis (12) of the balancing shaft (1).

## Revendications

1. Mécanisme d'équilibrage de masse (7) pour équilibrer des forces de masse et/ou des couples de masse d'un moteur à combustion interne, comprenant un arbre d'équilibrage (1) qui présente un centre de gravité de masse (13) espacé de son axe de rotation (12) et au moins un tourillon de palier (3, 4) sur lequel l'arbre d'équilibrage (1) est supporté à rotation dans un point de palier (5) du moteur à combustion interne, le tourillon de palier (3, 4) comprenant deux portions de tourillon de palier cylindriques espacées axialement (17), qui délimitent un évidement (14) s'étendant essentiellement ou complètement au-delà de l'axe de rotation (12) par rapport au centre de gravité de masse (13), **caractérisé en ce que** le point de palier (5) est réalisé sous forme de palier à roulement (8), le palier à roulement (8) étant réalisé sous forme de palier à aiguilles exempt de bague intérieure dont les aiguilles (11) roulent sur le tourillon de palier (3, 4) en surmontant axialement les portions de tourillon de palier (17).

2. Mécanisme d'équilibrage de masse (7) selon la revendication 1, **caractérisé en ce que** le palier à aiguilles (8) est réalisé sous forme de douille à aiguilles avec une bague extérieure à paroi mince (9), fabriquée par usinage sans enlèvement de copeaux, une cage (10) et les aiguilles (11) guidées à l'intérieur de celle-ci.

3. Mécanisme d'équilibrage de masse (7) selon la revendication 1, **caractérisé en ce qu'**il est prévu une lubrification sans pression du palier à roulement (8) au moyen d'un brouillard d'huile de lubrification se formant pendant le fonctionnement du moteur à combustion interne, le tourillon de palier (3, 4) faisant saillie radialement audessus d'au moins une portion d'arbre (21) adjacente à celui-ci au moins à l'intérieur d'une périphérie partielle (20) et au moins une ailette (18) s'étendant radialement vers l'extérieur, qui s'étend suivant un angle d'attaque (22) incliné par rapport à l'axe de rotation (12) de l'arbre d'équilibrage (1) et qui sert de pale pour refouler la pression ou l'aspiration du brouillard d'huile de lubrification dans le palier à roulement (8), s'étendant à l'intérieur de la périphérie partielle (20), entre la portion d'arbre (21) et la portion de tourillon de palier associée (17).

4. Mécanisme d'équilibrage de masse (7) selon la revendication 3, **caractérisé en ce que** dans l'évidement (14) s'étend au moins une nervure (19) s'étendant radialement vers l'extérieur et reliant les portions de tourillon de palier (17), la nervure (19) et l'ailette (18) s'étendant suivant le même angle d'attaque (22) inclinées par rapport à l'axe de rotation (12) de l'arbre d'équilibrage (1).
